# EUROPÄISCHE PATENTANMELDUNG

(11) **EP 4 474 314 A1**
(43) Veröffentlichungstag der Anmeldung: **11.12.2024**
(21) Anmeldenummer: 23177288.0
(22) Anmeldetag: 05.06.2023
(51) Int. Cl.: B65G 17/06, B65G 17/42, B65G 23/16, B65G 17/38

(54) **KETTENFÖRDERER FÜR EINE VERPACKUNGSMASCHINE MIT EINER ENDLOSEN GELENKKETTE UND EINER VIELZAHL VON AN DER GELENKKETTE ANGEBRACHTEN ADAPTERELEMENTEN**

(71) Anmelder: DIENST Packsystems GmbH, 65719 Hofheim am Taunus (DE)
(72) Erfinder: BRUM, Josef, 65936 Frankfurt am Main (DE); SEIBERT, Henner, 65817 Eppstein (DE)
(74) Vertreter: Franke, Markus

(57) **Zusammenfassung**

Die Erfindung betrifft einen Kettenförderer (2) für eine Verpackungsmaschine mit einer endlosen Gelenkkette (3) und einer Vielzahl von an der Gelenkkette (3) angebrachten Adapterelementen (7). Ferner betrifft die Erfindung eine Verpackungsmaschine mit einem Kettenförderer. Zur Dämpfung einer Geräuschentwicklung weist das Adapterelement (7) einen Dämpfungskörper (12) auf.

## Beschreibung

Die Erfindung betrifft einen Kettenförderer für eine Verpackungsmaschine mit einer endlosen Gelenkkette und einer Vielzahl von an der Gelenkkette angebrachten Adapterelementen. Ferner betrifft die Erfindung eine Verpackungsmaschine mit einem Kettenförderer.

Verpackungsmaschinen weisen häufig Kettenförderer auf, wobei der Kettenförderer zumindest eine, in der Regel zwei parallel verlaufende, endlose Gelenkketten aufweist, wobei diese endlosen Gelenkketten um zwei an den Enden der Förderstrecke angeordnete Umlenkräder umlaufen. Derartige Kettenförderer dienen dazu, die zu verpackenden Produkte zu den Verpackungen zu fördern. Häufig werden auch die Verpackungen mittels eines Kettenförderers gefördert, insbesondere parallel zu einem Kettenförderer, der dem Fördern der zu verpackenden Produkte dient. Kettenförderer können dabei vielfältige Aufgaben übernehmen. So ist es denkbar, dass ein Kettenförderer dazu eingesetzt wird, Funktionsbestandteile der Verpackungsmaschine zu führen, wie beispielsweise Einschieber, die dazu dienen, die Produkte in die Verpackungen einzuschieben. Auch fertig verpackte Produkte können mit einem Kettenförderer gefördert werden.

Allgemein weisen Kettenförderer zumindest eine endlose Gelenkkette, in der Regel zwei parallel geführte endlose Gelenkketten auf. Um an der Gelenkkette weitere Komponenten zu befestigen, werden an der Gelenkkette häufig eine Vielzahl von Adapterelementen angebracht, wobei diese Adapterelemente dazu dienen, Funktionsbestandteile mit der oder den Gelenkketten zu verbinden. Bei diesen Funktionsbestandteilen kann es sich beispielsweise um senkrecht zu der Förderrichtung bewegbare Einschieber handeln. Bei den Funktionsbestandteilen kann es sich aber auch um Produktaufnehmer, Schieber, steife Rahmenelemente, Produktaufnehmer, Platten oder Ähnliches handeln. Für derartige Anwendungen bestimmt Gelenkketten sind in der Regel derart ausgeführt, dass die Gelenkkette eine Vielzahl von gelenkig miteinander verbundenen Kettengliedern aufweist, wobei das jeweilige Kettenglied mit einem Mitnehmerelement versehen ist, wobei an diesen Mitnehmerelementen die Adapterelemente befestigt werden. Diese Mitnehmer bilden die Schnittstelle zur Befestigung individueller, funktionaler Anbauteile an Gelenkketten. Die Adapterelemente ermöglichen es, unterschiedliche Funktionsbestandteile mit der Gelenkkette zu verbinden, beispielsweise unterschiedliche Quertraversen. In der Regel ist das jeweilige Adapterelement mit nur einem einzigen Kettenglied verbunden, um die Gelenkigkeit und Verformbarkeit der Gelenkkette, insbesondere beim Umlaufen der Gelenkkette um die Umlenkräder, nicht zu beeinträchtigen. Problematisch dabei ist, dass sich dadurch eine hohe mechanische Belastung dieses Kettenglieds ergibt. Aus der Praxis ist es bekannt, die Belastung des Kettenglieds dadurch zu verringern, dass das Adapterelement sich zusätzlich an den Mitnehmerelementen eines der beiden benachbarten Kettenglieder oder den Mitnehmerelementen beider benachbarten Kettenglieder abstützt. Zu diesem Zweck sind an dem Verbindungsabschnitt des Adapterelements, der dem Verbinden des Adapterelements mit den Mitnehmerelementen des einen Kettenglieds dient, zumindest ein, häufig zwei, Stützschenkel ausgebildet, die sich jeweils von dem Verbindungsabschnitt des Adapterelements entlang der Förderrichtung des Kettenförderers zu dem benachbarten Kettenglied der Gelenkkette erstrecken und sich an dem Mitnehmerelement dieses benachbarten Kettenglieds senkrecht zu der Längserstreckungsrichtung der Gelenkkette, schwerkraftbedingt abstützen. Dadurch wird die mechanische Belastung auf mehrere Kettenglieder verteilt, ohne dass die Gelenkigkeit der Gelenkkette beeinträchtigt ist, da sich das Adapterelement mit dem Stützschenkel lediglich an dem benachbarten Kettenglied abstützt und nicht mit diesem verbunden ist. Dementsprechend wird ein Verschwenken dieses Kettenglieds gegenüber dem Kettenglied, mit dem das Adapterelement verbunden ist, nicht behindert.

In der Praxis hat sich gezeigt, dass Verpackungsmaschinen bzw. ein derartiger Kettenförderer im Betrieb eine nicht unerhebliche Geräuschentwicklung aufweist, die von den Verwendern der Verpackungsmaschine als störend empfunden wird.

Aufgabe der vorliegenden Erfindung ist es daher, eine Geräuschentwicklung der Verpackungsmaschine zu verringern oder für den Verwender zumindest subjektiv angenehmer zu gestalten.

Diese Aufgabe wird durch die Gegenstände der unabhängigen Patentansprüche gelöst.

Der erfindungsgemäße Kettenförderer kann bei einer Verpackungsmaschine verwendet werden. Der Kettenförderer weist zumindest eine endlose Gelenkkette und eine Vielzahl von an der Gelenkkette angebrachten Adapterelementen auf. Die Gelenkkette läuft um zwei an den Enden der Förderstrecke angeordnete Umlenkräder. Die Gelenkkette umfasst eine Vielzahl von gelenkig miteinander verbundenen Kettengliedern, wobei das jeweilige Kettenglied ein Mitnehmerelement aufweist. Die Mitnehmerelemente dienen dazu, die Adapterelemente mit den Kettengliedern zu verbinden. Es ist nicht notwendig und auch nicht vorgesehen, dass mit jedem Kettenglied ein Adapterelement verbunden ist. Vielmehr werden eine Vielzahl von Kettengliedern nicht mit einem Adapterelement, sondern nur vereinzelt Kettenglieder mit einem Adapterelement versehen sein. Das jeweilige Adapterelement weist einen Verbindungsabschnitt auf, wobei das jeweilige Adapterelement im Bereich des Verbindungsabschnitts mit dem Mitnehmerelement eines der Kettenglieder verbunden ist. Über die Verbindung des Adapterelements mit dem Mitnehmerelement ist das Adapterelement an der Gelenkkette angebracht und folgt der Bewegung des entsprechenden Kettenglieds. Das Adapterelement weist zumindest einen Stützschenkel auf, der sich von dem Verbindungsabschnitt entlang einer Förderrichtung des Kettenförderers zu einem benachbarten Kettenglied derselben Gelenkkette erstreckt und sich im Bereich eines Obertrums und/oder im Bereich des Untertrums der Gelenkkette an einem Mitnehmerelement des benachbarten Kettenglieds schwerkraftbedingt, insbesondere senkrecht zu der Förderrichtung, abstützt. Das Abstützen erfolgt dementsprechend bei im Wesentlichen geradlinig gestreckter Kette. Dies bedeutet, dass im Bereich der Umlenkräder kein Abstützen stattfindet, wodurch das dem Kettenglied, an dem das Adapterelement befestigt ist, benachbarte Kettenglied von dem Stützabschnitt weg verschwenken kann, wodurch ein Umlenken der Gelenkkette an den Umlenkrädern trotz des Stützschenkels nicht beeinträchtigt ist. Der Stützschenkel weist auf seiner dem Mitnehmerelement des benachbarten Kettenglieds zugewandten Seite einen elastisch verformbaren Dämpfungskörper auf. Mit anderen Worten ist der Stützschenkel gedämpft, was sich vorteilhaft auf die Geräuschentwicklung und die Laufruhe auswirkt.

Ein weiterer Vorteil des elastisch verformbaren Dämpfungskörpers besteht auch darin, dass auch Schwingungsbewegungen zwischen dem Adapterelement und dem Kettenglied gedämpft werden, was sich vorteilhaft auf die Lagestabilität des Adapterelements auswirkt. Auch ein Schlagen oder Klappern des Adapterelements an der Gelenkkette wird durch den elastisch verformbaren Dämpfungskörper vermieden.

Wie bereits ausgeführt, bilden die Mitnehmerelemente die Schnittstelle der Gelenkkette zur Befestigung individueller, funktionaler Anbauteile. Das Adapterelement kann dabei eine integraler Bestandteil des funktionalen Anbauteils sein. Als besonders vorteilhaft wird es allerdings angesehen, wenn das Adapterelement für unterschiedliche, funktionale Anbauteile verwendet werden kann. Daher wird es als besonders vorteilhaft angesehen, wenn das Adapterelement einen Anbindungsabschnitt zum Befestigen von funktionalen Anbauteilen aufweist. Dieser Anbindungsabschnitt kann beispielsweise Bolzen zum Aufstecken der weiteren Anbauteile aufweisen, Gewindeabschnitte zum Verschrauben der weiteren Anbauteile aufweisen und/oder Durchgangsöffnungen zum Einstecken von korrespondierenden Befestigungskomponenten der Anbauteile aufweisen.

Vorzugsweise bestehen die Gelenkkette und/oder das Adapterteil aus einem Metall oder einer Metalllegierung, bspw. aus Stahl oder Aluminium.

Es wird als besonders vorteilhaft angesehen, wenn der Kettenförderer zumindest zwei in einer Querrichtung gegenüberliegende, parallel zueinander verlaufende Gelenkketten aufweist.

In diesem Zusammenhang wird es als besonders vorteilhaft angesehen, wenn der Kettenförderer eine Vielzahl von Quertraversen aufweist, wobei die jeweilige Quertraverse an in Querrichtung gegenüberliegenden Paaren von Adapterelementen befestigt ist. Die Querrichtung, die senkrechte Richtung und die Förderrichtung stehen vorzugsweise senkrecht zueinander. Die Förderrichtung und die Querrichtung liegen vorzugsweise in einer horizontalen Ebene.

Es wird als besonders vorteilhaft angesehen, wenn eines der Umlenkräder als angetriebenes Zahnrad ausgebildet ist. Dementsprechend dient dieses Umlenkrad gleichzeitig als Antriebsrad zum Antreiben der Gelenkkette.

Bei der Gelenkkette kann es sich beispielsweise um eine Bolzenkette, um eine Buchsenkette oder um eine Rollenkette handeln.

Vorzugsweise weisen die Kettenglieder Kettenlaschen auf, wobei die Kettenglieder über Bolzen gelenkig miteinander verbunden sind.

Bei einer Gelenkketten mit Bolzen wird es als vorteilhaft angesehen, wenn zumindest einige der Bolzen als verlängerte Bolzen ausgebildet sind und gegenüber Kettenlaschen der Kettenglieder in der Querrichtung hervorstehen, wobei die verlängerten Bolzen die Mitnehmerelemente der Kettenglieder bilden. Vorzugsweise ist jeder zweite Bolzen als verlängerter Bolzen ausgebildet.

Die Bolzen sind vorzugsweise vollzylindrisch ausgebildet. Dabei wird es als vorteilhaft angesehen, wenn das Adapterelement zu den Bolzen korrespondierende Aufnahmeöffnungen aufweist, wobei die Aufnahmeöffnungen derart ausgebildet sind, dass das Adapterelement in der Querrichtung auf den bzw. die Bolzen aufschiebbar ist. Die Sicherung des Adapterelements gegen ein Abziehen von den Bolzen kann beispielsweise mittels einer Madenschraube erfolgen, die senkrecht zu der Erstreckungsrichtung des Bolzens in das Adapterelement einschraubbar ist.

Insbesondere umfasst die Gelenkkette innere und äußere Kettenlaschen, wobei die Kettenlaschen über Bolzen miteinander verbunden sind, wobei zumindest einige der Bolzen als verlängerte Bolzen ausgebildet sind und gegenüber den Kettenlaschen in der Querrichtung hervorstehen, wobei die verlängerten Bolzen die Mitnehmerelemente der Kettenglieder bilden. Eine derartige Gestaltung ist besonders einfach und kostengünstig sowie als Zukaufteil zu erwerben.

Es wird als besonders vorteilhaft angesehen, wenn das jeweilige Umlenkrad eine mit der Gelenkkette in Eingriff befindliche stirnseitige Verzahnung aufweist. Vor dem Hintergrund der Dämpfung einer Geräuschentwicklung wird es als vorteilhaft angesehen, wenn zumindest an einer der axialen Seiten des Umlenkrads ein Dämpfungsring aus einem elastisch verformbaren Material ausgebildet ist, wobei der Dämpfungsring eine umlaufende, in die radiale Richtung weisende Anlagefläche für die Gelenkkette aufweist, zur Dämpfung einer Geräuschentwicklung zwischen der Gelenkkette und dem Umlenkrad.

In einer besonders bevorzugten Ausführungsform ist vorgesehen, dass das jeweilige Kettenglied zumindest zwei Mitnehmerelemente aufweist, wobei das Adapterelement im Bereich des Verbindungsabschnitts mit den zumindest zwei Mitnehmerelementen genau eines der Kettenglieder verbunden ist. Dadurch wird ein Verkippen des Adapterelements bezüglich des Kettenglieds vermieden. Zudem wird eine bessere Lastverteilung des Adapterelements auf das Kettenglied, an dem es befestigt ist, erreicht.

Bei einer Gelenkkette, bei der sämtliche Bolzen als verlängerte Bolzen ausgebildet sind, sind dem jeweiligen Kettenglied zwei Bolzen und somit zwei Mitnehmerelemente zuordenbar, wobei das jeweilige Mitnehmerelement auch dem jeweils benachbarten Kettenglied zuordenbar ist. Bei einer solchen Gestaltung wird es als vorteilhaft angesehen, wenn das Adapterelement im Bereich des Verbindungsabschnitts mit den zwei dem Kettenglied zuordenbaren Bolzen verbunden ist.

Es ist durchaus denkbar, dass sich die jeweilige Stützlasche über mehrere benachbarte Kettenglieder erstreckt, sodass sich das Adapterelement an einer Vielzahl von weiteren Kettengliedern bzw. deren Mitnehmerelementen abstützen kann, bei geradlinig gestreckter Kette.

Es wird als besonders vorteilhaft angesehen, wenn die Mitnehmerelemente in einer parallel zu den Gelenkachsen der Gelenkkette ausgebildet Querrichtung gegenüber dem jeweiligen Kettenglied hervorstehen, wobei der Verbindungsabschnitt eine Aufnahmeöffnung für das Mitnehmerelement aufweist, wobei das Adapterelement entlang der Querrichtung auf das eine oder die mehreren Mitnehmerelemente des Kettenglieds aufgeschoben ist.

In einer bevorzugten Ausführungsform weist das jeweilige Adapterelement zwei sich in entgegengesetzte Richtungen erstreckende Stützschenkel auf.

Bei dem Dämpfungskörper handelt es sich vorzugsweise um einen elastisch verformbaren Kunststoff, insbesondere um einen synthetischen Gummi.

Grundsätzlich ist aber auch ein natürlicher Gummi, wie beispielsweise Kautschuk, denkbar.

Es wird als besonders vorteilhaft angesehen, wenn der Dämpfungskörper stoffschlüssig mit dem Stützschenkel verbunden ist, beispielsweise direkt auf den Stützschenkel vulkanisiert ist.

Die erfindungsgemäße Verpackungsmaschine umfasst den erfindungsgemäßen Kettenförderer.

Die im Zusammenhang mit dem Kettenförderer beschriebenen Vorteile und dessen vorteilhaften Gestaltungen gelten entsprechend für die Verpackungsmaschine und umgekehrt.

In den nachfolgenden Figuren wird die Erfindung anhand von einem Ausführungsbeispiel näher erläutert, ohne auf dieses beschränkt zu sein. Es zeigen:
- Fig. 1: eine Verpackungsmaschine mit einem Kettenförderer, an dem Produkteinschieber angebracht sind, in einer perspektivischen Ansicht,
- Fig. 2: einen Teilbereich der Verpackungsmaschine gemäß Fig. 1 in einer vergrößerten Darstellung,
- Fig. 3: die Verpackungsmaschine gemäß Fig. 1 in einem Längsschnitt, parallel zu der Förderrichtung des Kettenförderers,
- Fig. 4: einen Teilbereich des Kettenförderers im Bereich einer Umlenkrolle,
- Fig. 5: der Teilbereich gemäß Fig. 4 in einer Ansicht in Querrichtung,
- Fig. 6: einen Teilbereich des Kettenförderers im Bereich einer Umlenkrolle in einer Explosionsdarstellung,
- Fig. 7: ein Adapterelement des Kettenförderers in einer perspektivischen Ansicht,
- Fig. 8: das Adapterelement in einer Ansicht gemäß dem Pfeil VIII in Fig. 9,
- Fig. 9: das Adapterelement in einer Ansicht gemäß dem Pfeil IX in Fig. 8,
- Fig. 10: das Adapterelement in einer Ansicht gemäß dem Pfeil X in Fig. 8,

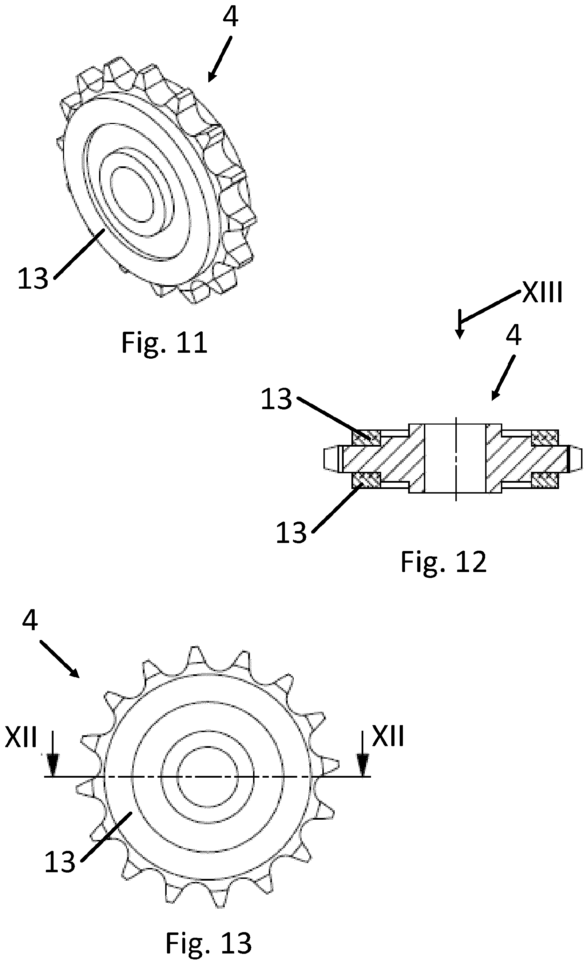

- Fig. 11: eine Ausführungsform eines Umlenkrads mit aufvulkanisiertem Dämpfungselement in einer perspektivischen Ansicht,
- Fig. 12: das Umlenkrad gemäß Fig. 11 in einer Schnittansicht gemäß der Linie XII-XII in Fig. 13,
- Fig. 13: das Umlenkrad in einer Ansicht gemäß dem Pfeil XIII in Fig. 12

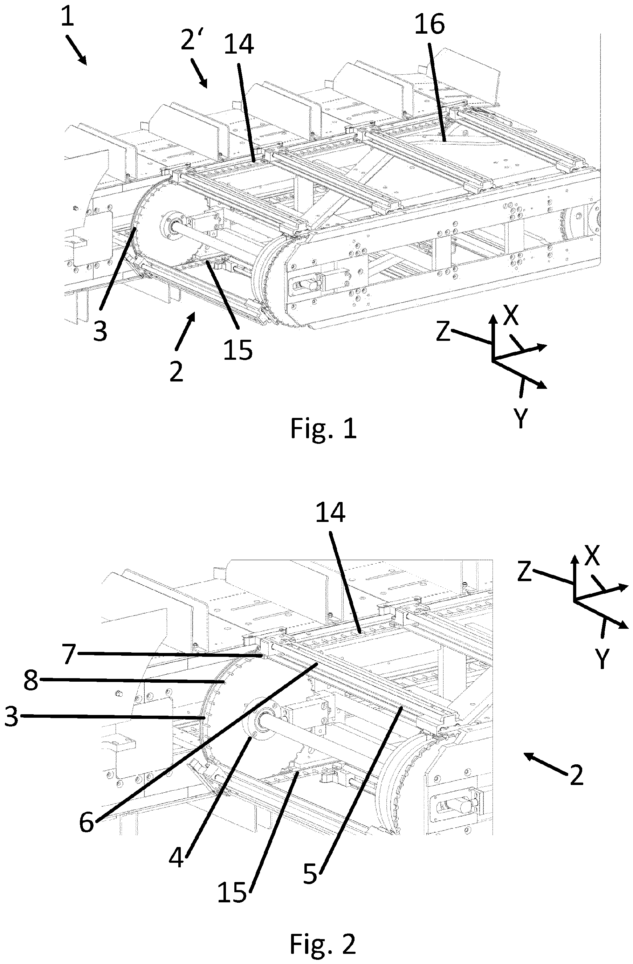

Die Fig. 1 und 2 zeigen eine Verpackungsmaschine 1, wobei die Verpackungsmaschine 1 einen Kettenförderer 2 aufweist, wobei dieser Kettenförderer 2 zwei parallel verlaufende, endlose Gelenkketten 3 aufweist, wobei die jeweilige Gelenkkette 3 um zwei an den Enden der Förderstrecke angeordnete Umlenkräder 4 umläuft. In den Figuren ist jeweils nur eine der zwei Gelenkketten dargestellt. Ein in einer Hochrichtung Z oben liegendes Obertrum 14 der Gelenkkette 3 erstreckt sich zwischen den Umlenkrädern 4 und bildet ein Lasttrum. Ein in der Hochrichtung Z unten liegendes Untertrum 15 der Gelenkette 3 bildet dementsprechend ein Leertrum. Eine Förderrichtung X des Kettenförderers 2 verläuft vorliegend in der Längsrichtung X des Kettenförderers 2. Der Kettenförderer 2 weist eine Vielzahl von sich in der Querrichtung Y erstreckenden Quertraversen 5 auf. An den Quertraversen 5 ist jeweils ein in der Querrichtung Y verschiebbarer Einschieber 6 angebracht. Mittels des jeweiligen Einschiebers 6 können Produkte, die auf einem zweiten, parallelen zu dem ersten Kettenförderer 2 angeordneten zweiten Kettenförderer 2' gefördert werden, in nicht näher dargestellte Produktverpackungen eingeschoben werden. Zwischen den beiden Gelenkketten 3 ist eine Kulissenführung ausgebildet, die eine Führungskulisse 16 aufweist. Der jeweilige Einschiebe 6 weist ein nicht näher dargestelltes Führungselement auf, wobei das Führungselement in der Führungskulisse 16 zwangsgeführt ist, derart, dass eine Bewegung in der Längsrichtung X zu einer Zwangsbewegung in der Querrichtung Y führt, wodurch beim Betrieb des Kettenförderers 2 der Einschieber 6 in der Förderrichtung X und entsprechend der Führungskulisse in der Querrichtung Y verschoben wird zum Einschieben der Produkte.

Die Befestigung der Quertraversen 5 an der jeweiligen Gelenkkette 3 erfolgt mittels eines Paars von Adapterelementen 7, wobei die Quertraverse 5 mittels des einen Adapterelements 7 des Paars mit der einen Gelenkkette 3 und mittels des anderen Adapterelements 7 des Paars mit der zweiten Gelenkkette 3 verbunden ist. Dabei ist das jeweilige Adapterelement 7 als Adapterplatte ausgebildet und mit jeweils einem Kettenglied der Gelenkkette 3 verbunden, wobei das jeweilige Kettenglied zu diesem Zweck zwei sich in der Querrichtung erstreckende Mitnehmerelemente 8 aufweist. Die Mitnehmerelemente 8 sind vorliegend durch verlängerte Bolzen der als Rollenkette ausgebildeten Gelenkkette 3 gebildet. Zum Befestigen des Adapterelements 7 an der Gelenkkette 3 wird das Adapterelement 7 auf die Mitnehmerelemente 8 des entsprechenden Kettenglieds in der Querrichtung Y aufgeschoben. Zu diesem Zweck weist das jeweilige Adapterelement zwei Durchgangsöffnungen für die Mitnehmerelemente 8 auf, wobei im Anschluss an das Aufschieben des Adapterelements 7 auf die Mitnehmerelemente 8 das Adapterelement 7 gegen ein Lösen gesichert werden kann, indem Madenschrauben in entsprechende Gewindeöffnungen 9 des Adapterelements 7 eingeschraubt werden.

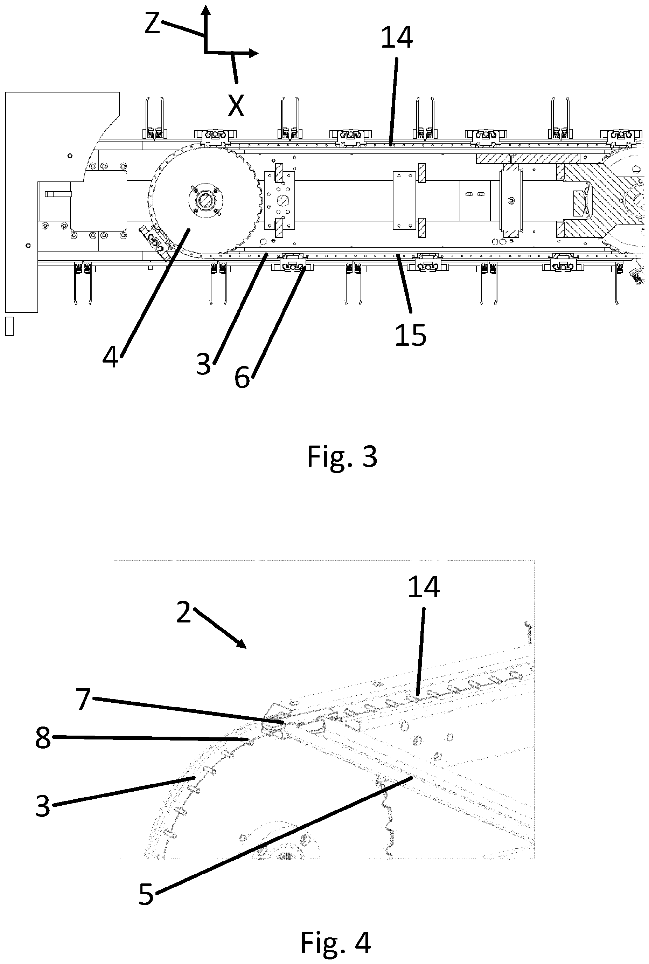

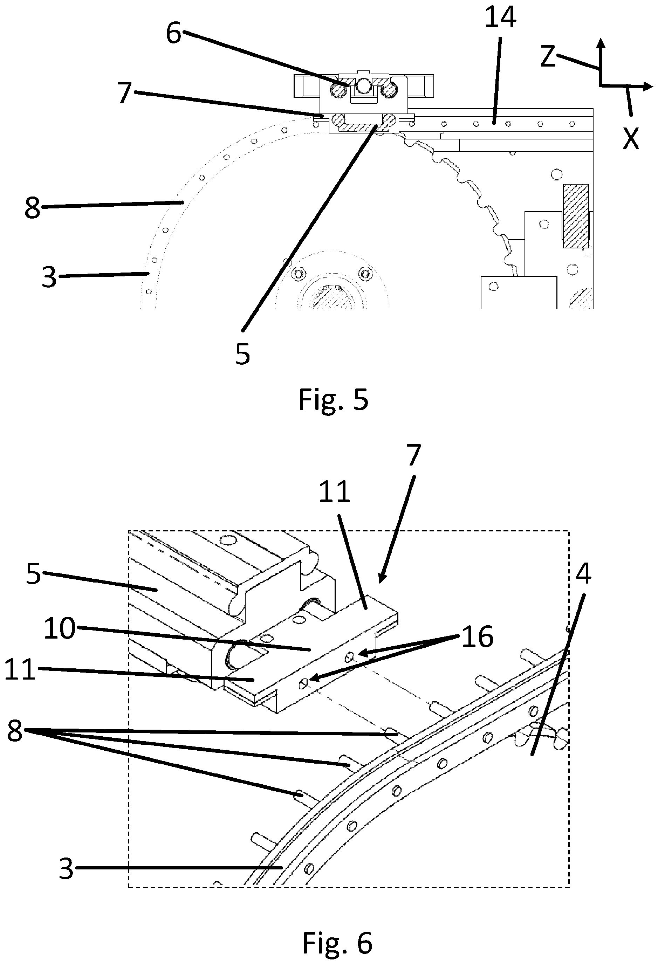

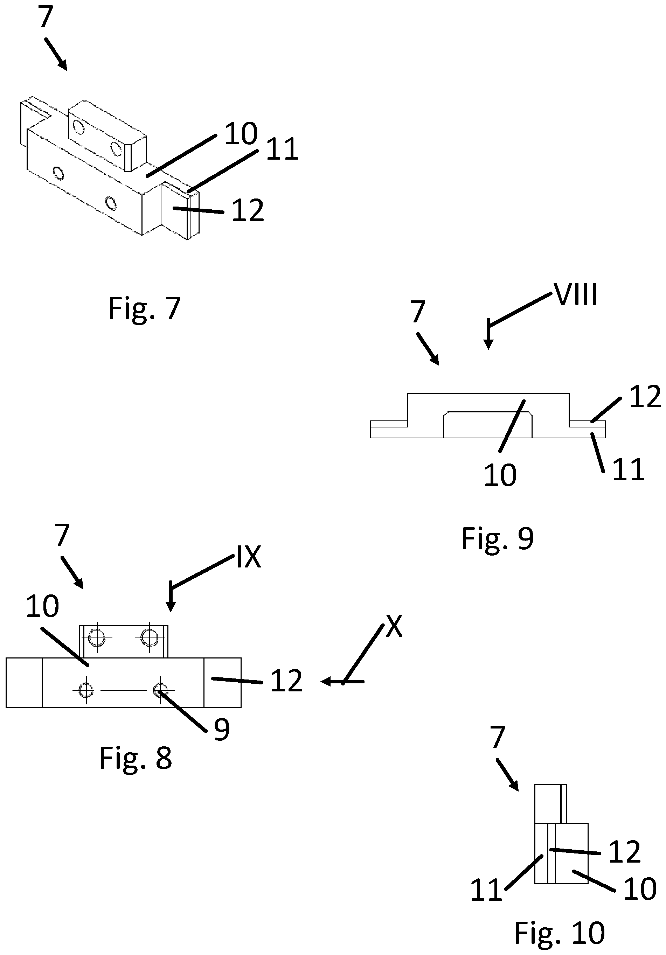

Das Adapterelement 7 als solches ist in den Fig. 7 bis 10 näher dargestellt. Das Adapterelement 7 weist einen Verbindungsabschnitt 10 auf, der zwei Aufnahmeöffnungen 16 für jeweils eine Mitnehmerelement 8 aufweist. Der Verbindungsabschnitt 10 dient somit dem Befestigen des Adapterelements 7 an der Gelenkkette 3. Wie den Fig. 7 bis 10 zu entnehmen ist, weist das Adapterelement 7 zwei sich in entgegengesetzte Richtungen von dem Verbindungsabschnitt 10 erstreckende Stützschenkel 11 auf. In der montierten Position des Adapterelements 7 erstrecken sich die Stützschenkel 11 entlang der Förderrichtung, somit entlang der X-Richtung, zu jeweils einem benachbarten Kettenglied derselben Gelenkkette 3, nämlich bis zu dem dem benachbarten Kettenglied zuordenbaren Bolzen. Mittels der Stützschenkel 11 stützt sich das Adapterelement 7 im Bereich des Obertrums 14 senkrecht zu der Förderrichtung, nämlich entlang der Hochrichtung Z, schwerkraftbedingt an dem Mitnehmerelement 8 des benachbarten Kettenglieds ab. Dies ist insbesondere den Fig. 4 und 5 zu entnehmen. Wie insbesondere der Fig. 5 zu entnehmen ist, wird durch dieses Abstützen eine zusätzliche Stabilisierung des Adapterelements 7 an der Gelenkkette 3 verwirklicht, da sich das Adapterelement 7 über einen größeren Bereich bzw. mehrere Punkte bzw. Stützstellen entlang der Förderrichtung X an der Gelenkkette 3 abstützt, ohne dass die zur Umlenkung der Gelenkkette 3 an dem jeweiligen Umlenkrad notwendige Gelenkigkeit der Kettenglieder eingeschränkt wird. Dementsprechend wird durch den Stützabschnitt 11 das Umlenken der Gelenkkette 3 an dem Umlenkrad 4 nicht beeinträchtigt.

Um eine Geräuschentwicklung zwischen den Mitnehmerelementen 8 und dem jeweiligen Stützschenkel 11 zu vermeiden, weist der Stützschenkel 11 auf seiner dem Mitnehmerelement 8 zugewandten Seite einen elastisch verformbaren Dämpfungskörper 12 auf. Vorliegend ist dieser Dämpfungskörper 12 aus Gummi und an den Stützschenkel 11 aufvulkanisiert.

Eine zusätzliche Dämpfung der Geräuschentwicklung beim Betrieb der Verpackungsmaschine 1 wird dadurch erreicht, dass das jeweilige Umlenkrad 4 eine mit der Gelenkkette 3 in Eingriff befindliche stirnseitige Verzahnung aufweist, wobei, zur Dämpfung der Geräuschentwicklung beim Kontakt des Umlenkrads 4 mit der Gelenkkette 3, an den beiden gegenüberliegenden axialen Seiten des Umlenkrads 4 jeweils ein Dämpfungsring 13 aus einem elastisch verformbaren Material ausgebildet ist, wobei der Dämpfungsring 13 eine umlaufende, in die radiale Richtung weisende Anlagefläche für die Gelenkkette 3 aufweist.

Der Dämpfungsring 13 und der Dämpfungskörper 12 können durchaus aus demselben Material bestehen.

Es wird als besonders vorteilhaft angesehen, wenn auch der Dämpfungsring 13 unmittelbar an das Umlenkrad 4 aufvulkanisiert ist.

### Bezugszeichenliste

- 1: Verpackungsmaschine
- 2: Kettenförderer
- 3: Gelenkkette
- 4: Umlenkrolle
- 5: Quertraverse
- 6: Einschieber
- 7: Adapterelement
- 8: Mitnehmerelement
- 9: Gewindeöffnung
- 10: Verbindungsabschnitt
- 11: Stützschenkel
- 12: Dämpfungskörper
- 13: Dämpfungsring
- 14: Obertrum
- 15: Untertrum
- 16: Aufnahmeöffnung

- X: Förderrichtung
- Y: Querrichtung
- Z: Hochrichtung

## Patentansprüche

1. Kettenförderer (2) für eine Verpackungsmaschine (1), wobei der Kettenförderer (2) zumindest eine endlose Gelenkkette (3) und eine Vielzahl von an der Gelenkkette (3) angebrachten Adapterelementen (7) aufweist, wobei die Gelenkkette (3) um zwei an den Enden der Förderstrecke angeordneten Umlenkräder (4) umläuft, wobei die Gelenkkette (3) eine Vielzahl von gelenkig miteinander verbundenen Kettengliedern aufweist, wobei das jeweilige Kettenglied ein Mitnehmerelement (8) aufweist, wobei das jeweilige Adapterelement (7) einen Verbindungsabschnitt (10) aufweist, wobei das jeweilige Adapterelement (7) im Bereich des Verbindungsabschnitts (10) mit dem Mitnehmerelement (8) eines der Kettenglieder verbunden ist, wobei das Adapterelement (7) einen Stützschenkel (11) aufweist, der sich von dem Verbindungsabschnitt (10) entlang einer Förderrichtung (X) des Kettenförderers (2) zu einem benachbarten Kettenglied der Gelenkkette (3) erstreckt und sich im Bereich eines Obertrums (14) und/oder im Bereich des Untertrums (15) der Gelenkkette (3) an einem Mitnehmerelement (8) des benachbarten Kettenglieds schwerkraftbedingt abstützt, wobei der Stützschenkel (11) auf seiner dem Mitnehmerelement (8) des benachbarten Kettenglieds zugewandten Seite mit einem elastisch verformbaren Dämpfungskörper (12) versehen ist, zur Dämpfung einer Geräuschentwicklung zwischen dem Mitnehmerelement (8) und dem Stützschenkel (11).

2. Kettenförderer nach Anspruch 1, wobei der Kettenförderer (2) zumindest zwei in einer Querrichtung (Y) gegenüberliegende, parallel zueinander verlaufende Gelenkketten (3) aufweist.

3. Kettenförderer nach Anspruch 2, wobei der Kettenförderer (2) eine Vielzahl von Quertraversen (5) aufweist, wobei die jeweilig Quertraverse (5) an in Querrichtung (Y) gegenüberliegenden Paaren von Adapterelementen (7) befestigt ist.

4. Kettenförderer nach einem der Ansprüche 1 bis 3, wobei eines der Umlenkräder (4) als angetriebenes Zahnrad ausgebildet ist.

5. Kettenförderer nach einem der Ansprüche 1 bis 4, wobei die jeweilige Gelenkkette (3) als Bolzenkette oder Buchsenkette oder Rollenkette ausgebildet ist.

6. Kettenförderer nach Anspruch 5, wobei die Kettenglieder Kettenlaschen aufweisen, wobei die Kettenglieder über Bolzen gelenkig miteinander verbunden sind, wobei zumindest einige der Bolzen als verlängerte Bolzen ausgebildet sind und gegenüber den Kettenlaschen hervorstehen, wobei die verlängerten Bolzen die Mitnehmerelemente (8) bilden.

7. Kettenförderer einem der Ansprüche 1 bis 6, wobei das jeweilige Umlenkrad (4) eine mit der Gelenkkette (3) in Eingriff befindliche stirnseitige Verzahnung und zumindest an einer der axialen Seite einen Dämpfungsring (13) aus einem elastisch verformbaren Material ausgebildet ist, wobei der Dämpfungsring (13) eine umlaufende in die radiale Richtung weisende Anlagefläche für die Gelenkkette (3) aufweist, zur Dämpfung einer Geräuschentwicklung zwischen der der Gelenkkette (3) und dem Umlenkrad (4).

8. Kettenförderer einem der Ansprüche 1 bis 7, wobei das jeweilige Kettenglied zumindest zwei Mitnehmerelemente (8) aufweist, wobei das Adapterelement (7) im Bereich des Verbindungsabschnitts (10) mit den zumindest zwei Mitnehmerelementen (8) genau eines der Kettenglieder verbunden ist.

9. Kettenförderer einem der Ansprüche 1 bis 8, wobei die Mitnehmerelemente (8) in einer parallel zu den Gelenkachsen der Gelenkkette (3) ausgebildeten Querrichtung (Y) gegenüber dem jeweiligen Kettenglied hervorstehen, wobei der Verbindungsabschnitt (10) eine Aufnahmeöffnung (16) für das Mitnehmerelement (8) aufweist, wobei das Adapterelement (7) entlang der Querrichtung (Y) auf das eine oder die mehreren Mitnehmerelemente (8) des Kettenglieds aufgeschoben ist.

10. Kettenförderer einem der Ansprüche 1 bis 9, wobei das jeweilige Adapterelement (7) zwei sich in entgegengesetzte Richtungen (X) erstreckende Stützschenkel (11) aufweist.

11. Kettenförderer einem der Ansprüche 1 bis 10, wobei es sich bei dem Material des Dämpfungskörpers (12) um einen elastischen Kunststoff handelt, insbesondere um einen Gummi handelt.

12. Kettenförderer einem der Ansprüche 1 bis 11, wobei der Dämpfungskörper (12) stoffschlüssig mit dem Stützschenkel (11) verbunden ist.

13. Kettenförderer einem der Ansprüche 1 bis 12, wobei der Dämpfungskörper (12) direkt auf den Stützschenkel (11) vulkanisiert ist.

14. Verpackungsmaschine (1), wobei die Verpackungsmaschine (1) zumindest einen Kettenförderer (2) nach einem der Ansprüche 1 bis 13 aufweist.

15. Verpackungsmaschine (1) nach Anspruch 14, wobei der Kettenförderer (2) zumindest zwei in der Querrichtung (Y) gegenüberliegende, parallel zueinander verlaufende Gelenkketten (3) aufweist, wobei an den Gelenkketten (3) jeweils mehrere Adapterelemente (7) befestigt sind, wobei die Adapterelemente (7) in der Querrichtung (Y) gegenüberliegende Paare von Adapterelementen (7) bilden, wobei die Verpackungsmaschine mehrere Einschieber (6) aufweist, wobei der jeweilige Einschieber (6) über eines der Paare von Adapterelementen (7) mit dem Kettenförderer (2) verbunden ist, wobei der jeweilige Einschieber (6) in der Querrichtung (Y) verschiebbar ist.
